# EUROPEAN PATENT SPECIFICATION

(11) **EP 3 148 331 B1**
(45) Date of publication and mention of the grant of the patent: **23.12.2020**
(21) Application number: 15799496.3
(22) Date of filing: 29.05.2015
(51) Int. Cl.: A01N 25/04, A01N 25/30, A01N 43/70, A01N 43/90, A01N 65/00, A01N 65/22, A01N 65/24

(54) **METHODS OF MAKING NANO-SIZED WATER-BASED DISPERSION COMPOSITIONS**
VERFAHREN ZUR HERSTELLUNG VON WASSERBASIERTEN NANODISPERSIONSZUSAMMENSETZUNGEN
PROCÉDÉS DE PRODUCTION DE COMPOSITIONS DE DISPERSION NANOMÉTRIQUE À BASE D'EAU

(30) Priority: 30.05.2014 US 201462005595 P
(43) Date of publication of application: 05.04.2017
(73) Proprietor: OMS Investments, Inc., Los Angeles, CA 90067 (US)
(72) Inventor: ESSINGER, James, F. Jr., Yuma, AZ 85364 (US); SHELL, Elizabeth, A., Powell, OH 43065 (US)
(74) Representative: Patentanwälte Bressel und Partner mbB
(86) International application number: PCT/US2015/033144
(87) International publication number: WO 2015/184238

(56) References cited:
- EP-A1- 0 480 690
- WO-A1-98/56362
- WO-A1-2010/076812
- WO-A1-2010/146606
- WO-A1-2011/010910
- WO-A1-2013/105026
- WO-A2-2004/039351
- WO-A2-2009/087678
- WO-A2-2011/086576
- US-A- 5 683 972
- US-A1- 2013 137 578
- DATABASE WPI Week 201060 Thomson Scientific, London, GB; AN 2010-K00253 XP002773956, -& CN 101 755 738 A (SHENZHEN NOPOSION AGROCHEMICAL CO LTD) 30 June 2010 (2010-06-30)
- MEHNERT W ET AL: "SOLID LIPID NANOPARTICLES PRODUCTION, CHARACTERIZATION AND APPLICATIONS", ADVANCED DRUG DELIVERY REVIEWS, ELSEVIER, AMSTERDAM, NL, vol. 47, no. 2/03, 25 April 2001 (2001-04-25), pages 165-196, XP001180027, ISSN: 0169-409X, DOI: 10.1016/S0169-409X(01)00105-3

## Description

### FIELD OF INVENTION

The present invention relates generally to a method of manufacture of a nanoparticle-sized dispersion. The nanoparticle-sized dispersion comprises an aqueous continuous phase comprising an anionic surfactant, and a discontinuous hydrophobic phase comprising a branched or straight-chain polycarboxylic acid or a straight-chain monocarboxylic acid.

### BACKGROUND OF INVENTION

When an active ingredient is hydrophobic, it can be difficult to create a water-based composition of the active ingredient. Unacceptable phase separation by coalescence and growth of the solid particle are just two examples of ways in which such a composition can fail to remain evenly dispersed. These types of failures may be of high concern in industries in which the amount of active ingredient allowed is highly regulated, such as, for example, the application of herbicides. If the composition is no longer evenly dispersed, one cannot maintain a consistent percentage of active ingredient in each application of the composition. This may be a concern if the solution is made for consumer use requiring long-term storage.

The current solution to this problem is the use of a nanoparticle-size dispersion to disperse hydrophobic active ingredients in a water-based composition. However, due to the noted failure of hydrophobic active ingredients to remain evenly dispersed in water-based compositions, a nanoformulation including a hydrophobic active ingredient is difficult to obtain and maintain.

Two forms of nanoparticle-size dispersions have been discovered: (1) a microemulsion where the discontinuous phase is a liquid; and (2) a solid nanoparticle dispersion. These forms require specific methods or the addition of specific components to allow the dispersion to remain intact.

The first type of common dispersion is a water-based microemulsion. A liquid hydrophobic phase is typically created for the hydrophobic active ingredient, requiring an excess of solvent. The solvent may be an organic solvent. A sufficient amount of an emulsifier must be included to microemulsify the liquid hydrophobic phase into the water phase. Microemulsions can advantageously allow a hydrophobic active ingredient to be dispersed in an aqueous phase, but the microemulsion process can prove costly due to the presence of a large amount of solvent, e.g. organic solvent, and/or the inclusion of an emulsifier component. Further, the presence of an emulsifier component increases the possibility of extraction of the active ingredient from the small particles. This extraction could cause physical failure of the formulation.

The second type of dispersion of hydrophobic ingredients in an aqueous solution is the solid nanoparticle dispersion, such as the solid lipid nanoparticle ("SLN") dispersion. For example, United States Patent 6,238,694 discloses a method of producing nanoparticles of less than 1 micron by heating a lipidic substance at a temperature at least equal to its melting point; heating a mixture comprising water, a surfactant and a co-surfactant at a temperature at least equal to the melting point of the lipidic substance; combining the mixture with the lipidic substance; obtaining a microemulsion; and diluting the microemulsion with 1 to 10 volumes of cold water to form solid nanoparticles. High-shear mixing is used in SLN to create the nanoformulation. A rotor or impellor, together with a stationary component known as a stator, or an array of rotors and stators, is used either in a tank containing the solution to be mixed, or in a pipe through which the solution passes, to create shear. This process can advantageously provide for a dispersion of the hydrophobic active ingredient in an aqueous solution.

Compared to a microemulsion, the SLN process does not require the addition of an emulsifier, extra solvent and/or an organic solvent component. However, the SLN process includes additional, cumbersome steps of making the nanoformulation, including diluting the formulation in cold water, or the usage of high-shear mixing to create the nanoparticles. These additional step may be costly and can greatly increase production time.

As further state of the art, WO 2010076812 A1 provides novel herbal nano-emulsion based formulations comprising a combination of lemon juice and /or rose water as therapeutically active aqueous phase entrapped in oil phase selected from one or more essential oils and process for the preparation of the same in pharmaceutically acceptable dosage forms for topical treatment of acne and other skin disorder like eczema, psoriasis, aging scaring and the like with increased efficacy.

WO 2011086576 A2 describes an agrochemical isotropic dispersion of at least two immiscible liquids comprising at least one water soluble herbicidal salt; a surfactant system comprising a sorbitan ester or an alkoxylate thereof in combination with at least one vegetable oil alkoxylate; and water and a process for the preparation thereof. Also described is an agrochemical microemulsion formulation comprising the isotropic dispersion and a method for controlling a weed at a desired location comprising applying the microemulsion formulation.

### SUMMARY OF EMBODIMENTS OF THE INVENTION

The present invention provides a method of making a transparent nanoformulation according to the appended claims. The present invention overcomes the deficiencies of the microemulsion and solid nanoparticle dispersion methods. Among other things, the invention provides for a method of preparing a nanoformulation that reduces the need for costly organic solvents and emulsifiers, reduces the amount of solvent necessary, and limits the process steps in formulating the nanoformulation. Further, the methods described herein do not require dilution with cold water and high shear mixing, thereby reducing costs and allowing for a more efficient mixing process.

The nanoformulation comprises a continuous phase and a discontinuous phase, where the continuous phase is an aqueous phase comprising an anionic surfactant comprising sodium lauryl sulfate or sodium lauroyl sarcosinate, and where the discontinuous phase is a hydrophobic phase, comprising a hydrophobic, liquid or solid, branched or straight-chain polycarboxylic acid or a hydrophobic straight-chain monocarboxylic acid.

It is an object of some embodiments to provide a method of making a nanoparticle-sized dispersion of a hydrophobic phase that does not require extra solvent, and/or organic solvents.

It is an object of some embodiments to provide a nanoparticle-sized dispersion of a hydrophobic active ingredient in a manner that reduces costs associated with excess steps and components.

It is an object of any of the embodiments described herein that the active ingredient may be a pesticide or an odorant, such as a repellent, an attractant, a perfume, or mixtures thereof.

It is an object of some embodiments to provide a method of making a nanoformulation according to the method of claim 1.

It is an object of some embodiments to provide a method of making a nanoformulation in which the nanoformulation requires less than 30 minutes of low-energy mixing to create the dispersion of the discontinuous phase in the continuous phase.

In the method of making a nanoformulation the steps of high-shear mixing and diluting the formulation with cold water are not required.

### DETAILED DESCRIPTION OF EMBODIMENTS OF THE INVENTION

The present invention, in accordance with claim 1, relates to a method of making a transparent nanoformulation comprising a continuous phase and a discontinuous phase, where the continuous phase is an aqueous phase and the discontinuous phase is a hydrophobic phase. The continuous phase comprises an anionic surfactant comprising sodium lauryl sulfate or sodium lauroyl sarcosinate. The discontinuous phase comprises a hydrophobic acid.

The method does not require the use of extra solvent, or organic solvents or emulsifiers. The method does not require the steps of diluting the microemulsion in cold water or high-shear mixing, as required by the prior art. As a result, the nanoformulations described herein may be made faster and may be produced with less components than the current methods used in the industry.

Once the discontinuous phase is suspended in the continuous phase, transparency of the resulting composition may be a visual indication that the dispersed phase contains particles with a particle size between 10 and 100 nm, indicative of a nanoformulation. "Transparent" as applied to a microemulsion means that the composition appears as a single phase without any particulate or colloidal material or a second phase being present when viewed by the naked eye. If a composition maintains transparency over a period of time, this may be indicative of the formulation maintaining the nanoformulation described herein.

### The Continuous Phase

The continuous phase is the phase in which the discontinuous phase is dispersed.

The continuous phase is an aqueous phase. The aqueous phase includes an anionic surfactant comprising sodium lauryl sulfate or sodium lauroyl sarcosinate. In some embodiments, the anionic surfactant is a wetting agent. In some embodiments, the anionic surfactant has a hydrophilic-lipophilic balance value of greater than or equal to 20, greater than or equal to 25, greater than or equal to 30, greater than or equal to 35, or greater than or equal to 40.

In some embodiments, the continuous phase is a room temperature composition. Because the hydrophobic active ingredient (contained in the dispersed phase, described below) may be a solid at room temperature, heating of the continuous phase prior to mixing with the dispersed phase may be required to maintain a liquid hydrophobic active ingredient during the mixing process. In some embodiments, the continuous phase is heated to more than 80 °C, more than 75 °C, more than 70 °C, more than 65 °C, more than 60 °C, more than 55 °C, more than 50 °C, more than 45 °C, or more than 40 °C. In some embodiments, the nanoformulation is allowed to cool to room temperature after the discontinuous phase has been mixed with the continuous phase.

### The Discontinuous Phase

The discontinuous phase is the phase dispersed in the continuous phase. The discontinuous phase is a hydrophobic phase. The discontinuous phase comprises a hydrophobic acid.

The hydrophobic acid is a branched or straight-chain polycarboxylic acid or a straight-chain monocarboxylic acid. Suitable polycarboxylic acids may include cyclic dicarboxylic acids such as the dimerization products of oleic acid. An example of a dimerization products of oleic acid is Westvaco Diacid® 1550, sold commercially by MeadWestvaco. Suitable straight-chain monocarboxylic acids may include lauric acid, myristic acid, and stearic acid.

In some embodiments, the discontinuous phase comprises a short-chain alcohol, such as a C₁-C₁₄ alcohol. Suitable short-chain alcohols include 1-butanol and 1-hexanol. Without wishing to be bound by theory, it is believed that the short-chain alcohol can act as a co-solvent that can partition into both the continuous and discontinuous phases and can aid in the formation of nanoparticles.

In some embodiments, the discontinuous phase may comprise pesticides, herbicides, insecticides, rodenticides, molluscicides, and/or fungicides. The pesticides, herbicides, insecticides rodenticides, molluscicides, and/or fungicides may be a liquid or a solid at room temperature. The pesticides, herbicides, rodenticides, molluscicides, or fungicides may have a solubility of less than 20 g/L, less than 15 g/L, less than 10 g/L, or less than 5 g/L.

Suitable pesticides may include triticonazole, atrazine, florasulam, or pyrethrum. Suitable pesticides may also include aclonifen, benzofenap, bifenox, bromobutide, bromofenoxim, chlomethoxyfen, chlorbromuron, chlorimuron-ethyl, chlornitrofen, chlorotoluron, chlorthal-dimethyl, clomeprop, cloransulam-methyl, cyclosulfamuron, daimuron, desmedipham, dichlobenil, diclosulam, diflufenican, dimefuron, dinitramine, diuron, fenoxaprop-ethyl, fenoxaprop- P-ethyl, flamprop-methyl, flumetsulam, flumiclorac-pentyl, flumioxazin, flupoxam, fluridone, flurtamone, imazaquin, ipfencarbazone, isoproturon, isoxaben, isoxapyrifop, lenacil, linuron, mefenacet, methabenzthiazuron, metobenzuron, metosulam, naproanilide, neburon, norflurazon, orthosulfamuron, oryzalin, oxadiazon, oxyfluorfen, penoxsulam, phenmedipham, prodiamine, prometryn, propanil, propazine, propyzamide, pyrazolynate, pyributicarb, pyriftalid, pyrimisulfan, pyroxsulam, quinclorac, quizalofop-ethyl, quizalofop-P-ethyl, siduron, simazine, tefuryltrione, terbuthylazine, terbutryn, thiazopyr, tralkoxydim, trietazine and/or derivatives thereof.

Suitable herbicides may include acetochlor, alachlor, ametryn, anilofos, atrazine, azafenidin, benfluralin, benfuresate, bensulide, benzfendizone, benzofenap, bromobutide, bromofenoxim, butachlor, butafenacil, butamifos, butralin, butylate, cafenstrole, carbetamide, chlorbromuron, chloridazon, chlorimuron-ethyl, chlorotoluron, chlorpropham, chlorthal-dimethyl, chlorthiamid, cinidon-ethyl, cinmethylin, clomazone, clomeprop, cloransulam-rnethyl, cyanazine, cycloate, cyclosulfamuron, daimuron, desmedipham, desmetryn, dichlobenil, diflufenican, dimefuron, dimepiperate, dirnethachlor, dimethametryn, dimethenamid, dinitramine, dinoterb, diphenamid, dithiopyr, diuron, EPTC, esprocarb, ethalfiuralin, ethofumesate, etobenzanid, ferioxaprop-ethyl, fenuron, flamprop-methyl, fluazolate, fluchloralin, flumetsulam, flumiclorac-pentyl, flumioxazin, fluometuron, fluorochloridone, flupoxam, flurenol, fluridone, fluroxypyr-1-methylheptyl, tlurtamone, fluthiacet-methyl, hexazinone, indanofan, isoproturon, isouron, isoxaben, isoxaiflutole, lenacil, linuron, mefenacet, metamitron, metazachlor, methabenzthiazuron, methyldymron, metobenzuron, metobromuron, metolachlor, metosulam, metoxuron, metribuzin, molinate, monolinuron, naproanilide, napropamide, neburon, norflurazon, orbencarb, oryzalin, oxadiargyl, oxadiazon, pebulate, pendimethalin, pentanochlor, pentoxazone, phenmedipham, piperophos, pretilachlor, prodiamine, profluazol, prometon, prometryn, propachlor, propanhl, propazine, propham, propisochlor, propyzamide, prosulfocarb, pyraflufen-ethyl, pyrazogyl, pyrazolynate, pyrazoxyfen, pyributicarb, pyridate, pyriminobac-methyl, quinclorac, quinmerac, siduron, simazine, simetryn, sulcotrione, sulfentrazone, sulfometuron, tebutam, tebuthiuron, terbacil, terbumeton, terbuthylazine, terbutryn, thenyichlor, thiazopyr, thidiazimin, thiobencarb, tiocarbazil, triallate, tribenuron, trietazine, trifluralin, and/or vernolate.

Suitable insecticides include cyfluthrin, cypermethrin, deltamethrin, fenpropathrin, fenvalerate, esfenvalerate, tralomethrin, acrinathrin, bifenthrin, resmethrin, tetramethrin, propoxur, isoprocarb, xylylcarb, metolcarb, XMC, carbaryl, pirimicarb, carbofuran, methomyl, fenoxycarb, alanycarb, metoxadiazone, acephate, phenthoate, vamidothion, trichlorfon, monocrotophos, tetrachlorvinphos, dimethylvinphos, phosalone, chlorpyrifos, chlorpyrifos-methyl, pyridaphenthion, quinalphos, methidathion, methamidophos, dimethoate, fermothion, azinphos-ethyl, azinphos-methyl, salithion, diflubenzuron, chlorfluazuron, lufenuron, hexaflumuron, flufenoxuron, flucycloxuron, cyromazine, diafenthiuron, hexythiazox, novaluron, teflubenzuron, triflumuron, 4-chloro-2-(2-chloro-2-methylpropyl)-5-(6-iodo-3-pyridylmethoxy)pyridazin-3(2H)-one, tebufenozide, 1-(2,6-difluorobenzoyl)-3-[2-fluoro-4-(trifluoromethyl)phenyl]urea, boric acid, avermectin, triazamate, 1-(2,6-difluorobenzoyl)-3-[2-fluoro-4-(1,1,2,3,3,3-hexafluoropropoxy)phenyl]urea, 2-tert-butylimino-3-isopropyl-5-phenyl-3,4,5,6-tetrahydro-2H-1,3,5-thiadiazon-4-one, cartap, thiodicarb, 1-(2,6-difluorobenzoyl)-3-[2-fluoro-4-(1,1,2,2-tetrafluoroethoxy)phenyl]urea, bensultap, acetamiprid, nitenpyram, diacloden, buprofezin, thiocyclam, fenoxycarb, fenazaquin, fenpyroxymate, pyridaben, pyriproxyfen, hydramethylnon, chlorfenapyr, fenpyroximate, pymetrozine, pyrimidifen, tebufenpyrad, indoxacarb, sulfluramid, milbemectin, and/or paradichlorobenzene.

Suitable fungicides may include benzimidazole compounds such as benomyl, carbendazim, thiabendazole and thiophanate-methyl; phenylcarbamate compounds such as diethofencarb; dicarboxyimide compounds such as procymidone, iprodione and vinclozolin; azole compounds such as diniconazole, epoxyconazole, tebuconazole, difenoconazole, cyproconazole, flusilazole and triadimefon; acylalanine compounds such as metalaxyl; carboxyamide compounds such as furametpyr, mepronil, flutolanil and tolyfluanid; organophosphate compounds such as tolclofos-methyl, fosetyl aluminum and pyrazophos; anilinopyrimidine compounds such as pyrimethanil, mepanipyrim and cyprodinil; cyanopyrrrole compounds such as fludioxonil and fenpiclonil; antibiotics such as blasticidin-S, kasugamycin, polyoxin and validamycin; methoxyacrylate compounds such as azoxystrobin, kresoxim-methyl and metominostrobin; chlorothalonil; manzeb; captan; folpet; oxine-copper; basic copper chloride; tricyclazole; pyroquilon; probenazole; phthalide; cymoxanil; dimethomorph; S-methylbenzo[1,2,3]thiadiazol-7-carbothioate; famoxadone; oxolinic acid; fluaziname; ferimzone; chlobenthiazone; isovaledione; tetrachloroisophthalonitrile; thiophthalimideoxybisphenoxyarsine; 3-iodo-2-propylbutylcarbamate; silver zeolite; silica gel silver; phosphate zirconium silver chloride; parahydroxy benzoic ester; sodium dehydroacetate and/or potassium sorbate.

In some embodiments, the discontinuous phase comprises odorants such as attractants, repellants, perfumes, or mixtures thereof. In other embodiments, the odorants may include cinnamon oil, rosemary oil, peppermint oil, mint oil, d-limonene, garlic oil, and/or geraniol. In some embodiments, the discontinuous phase is a room temperature composition. In some embodiments, the discontinuous phase contains a hydrophobic active ingredient that is a solid at room temperature. In some embodiments, the discontinuous phase is heated to create a true solution of the discontinuous phase prior to mixing with the continuous phase. In some embodiments, the discontinuous phase is heated to more than 80 °C, more than 75 °C, more than 70 °C, more than 65 °C, more than 60 °C, more than 55 °C, more than 50 °C, more than 45 °C, or more than 40 °C. In some embodiments, the nanoformulation is allowed to cool to room temperature after the discontinuous phase has been mixed with the continuous phase.

### Compositions

The invention discloses compositions comprising any of the continuous and discontinuous phases described herein. In some of the embodiments, the composition does not require an emulsifier. In some embodiments, the composition does not require organic solvents. In some embodiments, the composition does not require extra solvent. In some embodiments, extra solvent means that the solvent necessary to solubilize the hydrophobic compound is greater than the amount necessary to solubilize the hydrophobic compound in the presence of the hydrophobic acid as described herein. In some embodiments, the solvent necessary to solubilize the hydrophobic compound without the presence of a hydrophobic acid is more than 5 times greater, more than 7.5 times greater, more than 10 times greater, more than 12.5 times greater, more than 15 times greater, more than 17.5 times greater, more than 20 times greater, more than 22.5 times greater, more than 25 times greater, more than 27.5 times greater, more than 30 times greater, more than 32.5 times greater, more than 35 times greater, more than 37.5 times greater, more than 40 times greater, more than 42.5 times greater, more than 50 times greater, more than 55 times greater, more than 60 times greater, more than 65 times greater, more than 70 times greater, or more than 75 times greater than the amount necessary to solubilize the hydrophobic compound in the presence of the hydrophobic acid as described herein.

In one embodiment, the discontinuous phase comprises atrazine, cyclocarboxypropyloleic acid, and 1-butanol, and the continuous phase comprises sodium lauryl sulfate and water. In one embodiment, the discontinuous phase comprises atrazine, cyclocarboxypropyloleic acid, and 1-butanol, and the continuous phase comprises sodium lauryl sulfate, sodium lauroyl sarcosinate, and water. In one embodiment, the discontinuous phase comprises atrazine, cyclocarboxypropyloleic acid, and 1-butanol, and the continuous phase comprises sodium lauroyl sarcosinate and water. In one embodiment, the discontinuous phase comprises triticonazole, cyclocarboxypropyloleic acid, and 1-butanol, and the continuous phase comprises sodium lauryl sulfate and water. In one embodiment, the discontinuous phase comprises atrazine, lauric acid, and 1-hexanol, and the continuous phase comprises sodium lauryl sulfate and water.

In one embodiment, the discontinuous phase comprises atrazine, myristic acid, lauric acid, and 1-hexanol, and the continuous phase comprises sodium lauryl sulfate and water. In one embodiment, the discontinuous phase comprises atrazine, cyclocarboxypropyloleic acid, stearic acid and 1-hexanol, and the continuous phase comprises sodium lauryl sulfate and water. In one embodiment, the discontinuous phase comprises atrazine, cyclocarboxypropyloleic acid, stearic acid and 1-butanol, and the continuous phase comprises sodium lauryl sulfate and water. In one embodiment, the discontinuous phase comprises atrazine, florasulam, stearic acid, cyclocarboxypropyloleic acid, Jeffsol AG 1710, and 1-butanol, and the continuous phase comprises sodium lauryl sulfate and water. In one embodiment, the discontinuous phase comprises cinnamon oil, rosemary oil, peppermint oil, and cyclocarboxypropyloleic acid, and the continuous phase comprises sodium lauryl sulfate and water.

### The Mixing Process

The invention provides for methods of making nanoformulations. In some embodiments, the discontinuous phase of any of the embodiments described herein is mixed with the continuous phase of any of the embodiments described herein. In some embodiments, the discontinuous phase is added to the continuous phase while the continuous phase is being mixed. In some embodiments, the mixing is performed using, for example, low-energy mixing, which may include mixing the composition at a tip-speed of less than 20 ft/s, less than 15 ft/s, or less than 10 ft/s. In some embodiments, the discontinuous phase is mixed with the continuous phase for a brief mixing of less than 30 minutes. The resulting composition is transparent. In some embodiments, the resulting composition is transparent for more than one hour, more than two hours, more than four hours, more than one day, more than two days, more than five days, more than a week, more than a month, more than two months, more than three months, more than six months, more than a year.

The mixing process does not include the step of high-shear mixing, as may be necessary in the creation of a SLN formulation. The mixing process does not require the use of cold dilution water, as may be necessary in the creation of a SLN formulation. In some embodiments, the mixing process does not include the steps described in United States Patent No. 6,238,694.

In some embodiments, the use of emulsifiers, extra solvent, or organic solvents is unnecessary to create the nanoformulation.

### Methods of Use

In a disclosed embodiment, any of the compositions described herein are applied to an area using a sprayer. In one embodiment, the sprayer is an atomizing sprayer. In some embodiments, the sprayer contains an atomizing spray nozzle. In some embodiments, the atomizing spray nozzle is a full cone design nozzle, hollow cone design nozzle, air assist design nozzle, or a flat spray nozzle.

In one embodiment, the composition is applied to an area to control undesirable vegetation. In one embodiment, the composition is applied to an area to control pests, insects, molluscs, or rodents. In one embodiment, the composition is applied to the surface of a pest, insect, mollusc, or rodent. In one embodiment, the composition is applied to an area to control fungus. In any of the embodiments described herein, the area may include, but not be limited to, a field, a room, a surface, or a plant.

### EXAMPLES

The following specific examples are presented to further illustrate and explain certain aspects of the present invention. The examples are set forth for illustration. In the following examples, all percentages and parts are by weight unless otherwise specified.

The positive visual indication of transparency was used in the examples described herein to indicate that a nanoformulation was created.

### EXAMPLE 1

A room temperature composition of atrazine technical powder, Westvaco Diacid® 1550, and 1-butanol was mixed with sodium lauryl sulfate powder and water using low-energy mixing. All components were kept at room temperature throughout the mixing process. The resulting composition had the following components in weight percentage:

| **Component** | **Wt %** |
|---|---|
| Atrazine technical powder (98%) | 0.22 |
| Westvaco Diacid® 1550 | 2.00 |
| 1 -butanol | 0.40 |
| Sodium lauryl sulfate powder | 6.50 |
| Water | 90.88 |

Upon brief low-energy mixing of less than 30 minutes, the resulting composition was transparent at room temperature and remained transparent when observed 15 minutes later.

### EXAMPLE 2

A room temperature composition of atrazine technical powder, Westvaco Diacid® 1550, and 1-butanol was mixed with sodium lauryl sulfate powder, sodium lauroyl sarcosinate, and water using low-energy mixing. All components were kept at room temperature throughout the mixing process. The resulting composition had the following components in weight percentage:

| **Component** | **Wt %** |
|---|---|
| Atrazine technical powder (98%) | 0.22 |
| Westvaco Diacid® 1550 | 2.00 |
| 1 -butanol | 0.40 |
| Sodium lauryl sulfate powder | 4.2 |
| Sodium lauroyl sarcosinate (30% solution) | 17.3 |
| Water | 75.88 |

Upon brief low-energy mixing of less than 30 minutes, the resulting composition was transparent at room temperature and remained transparent when observed 15 minutes later.

### EXAMPLE 3

A room temperature composition of atrazine technical powder, Westvaco Diacid® 1550, and 1-butanol was mixed with sodium lauroyl sarcosinate solution and water using low-energy mixing. All components were kept at room temperature throughout the mixing process. The resulting composition had the following components in weight percentage:

| **Component** | **Wt %** |
|---|---|
| Atrazine technical powder (98%) | 0.22 |
| Westvaco Diacid® 1550 | 2.00 |
| 1 -butanol | 0.40 |
| Sodium lauroyl sarcosinate (30% solution) | 29.67 |
| Water | 67.71 |

Upon brief low-energy mixing of less than 30 minutes, the resulting composition was transparent at room temperature and remained transparent when observed 15 minutes later.

### EXAMPLE 4

A room temperature composition of triticonazole technical powder, Westvaco Diacid® 1550, and 1-butanol was mixed with sodium lauryl sulfate powder and water using low-energy mixing. All components were kept at room temperature throughout the mixing process. The resulting composition had the following components in weight percentage:

| **Component** | **Wt %** |
|---|---|
| Triticonazole technical powder 98%) | 1.08 |
| Westvaco Diacid® 1550 | 3.50 |
| 1 -butanol | 0.40 |
| Sodium lauryl sulfate powder | 16.50 |
| Water | 78.52 |

Upon brief low-energy mixing of less than 30 minutes, the resulting composition was transparent at room temperature and remained transparent when observed 15 minutes later.

### EXAMPLE 5

A hot composition of atrazine technical powder, lauric acid, and 1-hexanol was mixed with a hot mixture of sodium lauryl sulfate powder and water using low-energy mixing. The resulting composition had the following components in weight percentage:

| **Component** | **Wt %** |
|---|---|
| Atrazine technical powder (98%) | 0.22 |
| Lauric Acid | 2.00 |
| 1-hexanol | 0.50 |
| Sodium lauryl sulfate powder | 8.90 |
| Water | 88.38 |

Upon brief low-energy mixing of less than 30 minutes, the resulting composition was transparent when allowed to cool to room temperature and remained transparent when observed 15 minutes later.

### EXAMPLE 6

A hot composition of atrazine technical powder, myristic acid, lauric acid, and 1-hexanol was mixed with a hot mixture of sodium lauryl sulfate powder and water using low-energy mixing. The resulting composition had the following components in weight percentage:

| **Component** | **Wt %** |
|---|---|
| Atrazine technical powder (98%) | 0.22 |
| Myristic acid | 0.68 |
| Lauric acid | 1.32 |
| 1-hexanol | 0.50 |
| Sodium lauryl sulfate powder | 8.90 |
| Water | 88.38 |

Upon brief low-energy mixing of less than 30 minutes, the resulting composition was transparent when allowed to cool to room temperature and remained transparent when observed 15 minutes later.

### EXAMPLE 7

A hot composition of atrazine technical powder, stearic acid, Westvaco Diacid® 1550, and 1-hexanol was mixed with a hot mixture of sodium lauryl sulfate powder and water using low-energy mixing. The resulting composition had the following components in weight percentage:

| **Component** | **Wt %** |
|---|---|
| Atrazine technical powder (98%) | 0.22 |
| Stearic acid | 0.32 |
| Westvaco Diacid® 1550 | 1.68 |
| 1-hexanol | 0.50 |
| Sodium lauryl sulfate powder | 8.90 |
| Water | 88.38 |

Upon brief low-energy mixing of less than 30 minutes, the resulting composition was transparent when allowed to cool to room temperature and remained transparent when observed 15 minutes later.

### EXAMPLE 8

A hot composition of atrazine technical powder, stearic acid, Westvaco Diacid® 1550, and 1-butanol was mixed with a hot mixture of sodium lauryl sulfate powder and water using low-energy mixing. The resulting composition had the following components in weight percentage:

| **Component** | **Wt %** |
|---|---|
| Atrazine technical powder (98%) | 0.22 |
| Stearic acid | 0.32 |
| Westvaco Diacid® 1550 | 1.68 |
| 1-butanol | 0.40 |
| Sodium lauryl sulfate powder | 6.50 |
| Water | 90.88 |

Upon brief low-energy mixing of less than 30 minutes, the resulting composition was transparent when allowed to cool to room temperature and remained transparent when observed 15 minutes later.

### EXAMPLE 9

A hot composition of atrazine technical powder, florasulam, stearic acid, Westvaco Diacid® 1550, 1-butanol, and Jeffsol AG 1710 was mixed with a hot mixture of sodium lauryl sulfate powder and water using low-energy mixing. The resulting composition had the following components in weight percentage:

| **Component** | **Wt %** |
|---|---|
| Atrazine technical powder (98%) | 0.220 |
| Florasulam | 0.003 |
| Stearic acid | 0.320 |
| Westvaco Diacid® 1550 | 1.630 |
| 1 -butanol | 0.400 |
| Jeffsol AG 1710 | 0.050 |
| Sodium lauryl sulfate powder | 6.50 |
| Water | 90.877 |

Upon brief low-energy mixing of less than 30 minutes, the resulting composition was transparent when allowed to cool to room temperature and remained transparent when observed 15 minutes later.

### EXAMPLE 10

A room temperature composition of cinnamon oil, rosemary oil, peppermint oil, and Westvaco Diacid® 1550 was mixed with sodium lauryl sulfate powder and water using low-energy mixing. All components were kept at room temperature throughout the mixing process. The resulting composition had the following components in weight percentage:

| **Component** | **Wt %** |
|---|---|
| Cinnamon oil | 0.31 |
| Rosemary oil | 1.15 |
| Peppermint oil | 1.15 |
| Westvaco Diacid® 1550 | 1.00 |
| Sodium lauryl sulfate powder | 16.00 |
| Water | 80.39 |

Upon brief low-energy mixing of less than 30 minutes, the resulting composition was transparent at room temperature and remained transparent when observed 15 minutes later.

## Claims

1. A method of making a transparent nanoformulation, the method comprising:
mixing a) an aqueous continuous phase comprising an anionic surfactant comprising sodium lauryl sulfate or sodium lauroyl sarcosinate, and b) a hydrophobic discontinuous phase comprising a hydrophobic branched or straight-chain polycarboxylic acid or a hydrophobic straight-chain monocarboxylic acid, and
wherein the nanoformulation is made without the step of high-shear mixing and without the step of diluting the mixture of the aqueous continuous phase and the hydrophobic discontinuous phase in cold water.

2. The method of claim 1, wherein the nanoformulation is mixed for less than 30 minutes.

3. The method of claim 1 or 2, wherein the method is carried out without an organic solvent.

4. The method of any of the preceding claims, wherein the polycarboxylic acid is a dimerization product of oleic acid.

5. The method of any of the preceding claims, wherein the straight-chain monocarboxylic acid is lauric acid, myristic acid, or stearic acid.

6. The method of any of the preceding claims, wherein the discontinuous phase further comprises a pesticide, wherein the pesticide is a liquid or a solid at 20 °C.

7. The method of claim 6, wherein the pesticide is triticonazole, atrazine, florasulam, or pyrethrum.

8. The method of any of the preceding claims, wherein the discontinuous phase further comprises odorants.

9. The method of claim 8, wherein the odorants are attractants, repellants, perfumes, or a mixture thereof.

10. The method of claims 8 or 9, wherein the odorants are cinnamon oil, rosemary oil, peppermint oil, mint oil, d-limonene, or geraniol.

11. The method of any one of claims 1-5, wherein the hydrophobic discontinuous phase further comprises a pesticide, a herbicide, an insecticide, a rodenticide, a molluscicide, a fungicide, or a combination thereof.

## Patentansprüche

1. Verfahren zum Herstellen einer transparenten Nanoformulierung, wobei das Verfahren umfasst:
Mischen a) einer wässrigen kontinuierlichen Phase, die ein anionisches Tensid umfasst, das Natriumlaurylsulfat oder Natriumlauroylsarcosinat umfasst, und b) einer hydrophoben diskontinuierlichen Phase, die eine hydrophobe verzweigte oder geradkettige Polycarbonsäure oder eine hydrophobe geradkettige Monocarbonsäure umfasst, und
wobei die Nanoformulierung ohne den Schritt eines hochscherenden Mischens und ohne den Schritt einer Verdünnung der Mischung aus der wässrigen kontinuierlichen Phase und der hydrophoben diskontinuierlichen Phase in kaltem Wasser hergestellt wird.

2. Verfahren nach Anspruch 1, wobei die Nanoformulierung für weniger als 30 Minuten gemischt wird.

3. Verfahren nach Anspruch 1 oder 2, wobei das Verfahren ohne ein organisches Lösungsmittel ausgeführt wird.

4. Verfahren nach einem der vorangehenden Ansprüche, wobei die Polycarbonsäure ein Dimerisierungsprodukt von Ölsäure ist.

5. Verfahren nach einem der vorangehenden Ansprüche, wobei die geradkettige Monocarbonsäure Laurinsäure, Myristinsäure oder Stearinsäure ist.

6. Verfahren nach einem der vorangehenden Ansprüche, wobei die diskontinuierliche Phase ferner ein Pestizid umfasst, wobei das Pestizid bei 20 °C eine Flüssigkeit oder ein Feststoff ist.

7. Verfahren nach Anspruch 6, wobei das Pestizid Triticonazol, Atrazin, Florasulam oder Pyrethrum ist.

8. Verfahren nach einem der vorangehenden Ansprüche, wobei die diskontinuierliche Phase ferner Geruchsstoffe umfasst.

9. Verfahren nach Anspruch 8, wobei die Geruchsstoffe Lockstoffe, Abwehrstoffe, Duftstoffe oder eine Mischung davon sind.

10. Verfahren nach einem der Ansprüche 8 oder 9, wobei die Geruchsstoffe Zimtöl, Rosmarinöl, Pfefferminzöl, Minzöl, d-Limonen oder Geraniol sind.

11. Verfahren nach einem der Ansprüche 1-5, wobei die hydrophobe diskontinuierliche Phase ferner ein Pestizid, ein Herbizid, ein Insektizid, ein Rodentizid, ein Molluskizid, ein Fungizid oder eine Kombination davon umfasst.

## Revendications

1. Procédé de production d'une nanoformulation transparente, le procédé comprenant :
le mélange de a) une phase continue aqueuse comprenant un tensioactif anionique comprenant du laurylsulfate de sodium ou du lauroylsarcosinate de sodium, et b) une phase discontinue hydrophobe comprenant un acide polycarboxylique hydrophobe à chaîne ramifiée ou linéaire ou un acide monocarboxylique hydrophobe à chaîne linéaire, et
dans lequel la nanoformulation est produite sans l'étape de mélange à cisaillement élevé et sans l'étape de dilution du mélange de la phase continue aqueuse et de la phase discontinue hydrophobe dans de l'eau froide.

2. Procédé selon la revendication 1, dans lequel la nanoformulation est mélangée pendant moins de 30 minutes.

3. Procédé selon la revendication 1 ou 2, dans lequel le procédé est réalisé sans solvant organique.

4. Procédé selon l'une quelconque des revendications précédentes, dans lequel l'acide polycarboxylique est un produit de dimérisation d'acide oléique.

5. Procédé selon l'une quelconque des revendications précédentes, dans lequel l'acide monocarboxylique à chaîne linéaire est de l'acide laurique, de l'acide myristique ou de l'acide stéarique.

6. Procédé selon l'une quelconque des revendications précédentes, dans lequel la phase discontinue comprend en outre un pesticide, dans lequel le pesticide est un liquide ou un solide à 20 °C.

7. Procédé selon la revendication 6, dans lequel le pesticide est du triticonazole, de l'atrazine, du florasulam ou du pyrèthre.

8. Procédé selon l'une quelconque des revendications précédentes, dans lequel la phase discontinue comprend en outre des odorisants.

9. Procédé selon la revendication 8, dans lequel les odorisants sont des attractifs, des répulsifs, des parfums, ou un mélange de ceux-ci.

10. Procédé selon les revendications 8 ou 9, dans lequel les odorisants sont de l'huile de cannelle, de l'huile de romarin, de l'huile de menthe poivrée, de l'huile de menthe, du d-limonène ou du géraniol.

11. Procédé selon l'une quelconque des revendications 1 à 5, dans lequel la phase discontinue hydrophobe comprend en outre un pesticide, un herbicide, un insecticide, un rodenticide, un molluscicide, un fongicide, ou une combinaison de ceux-ci.
